# EUROPÄISCHE PATENTSCHRIFT

(11) **EP 4 006 004 B1**
(45) Veröffentlichungstag und Bekanntmachung des Hinweises auf die Patenterteilung: **01.10.2025**
(21) Anmeldenummer: 21000329.9
(22) Anmeldetag: 15.11.2021
(51) Int. Cl.: C05F 5/00

(54) **VERFAHREN ZUM HERSTELLEN EINES HUMINSÄUREEXTRAKTES SOWIE HUMINSÄUREEXTRAKT**
HUMIC ACID EXTRACT AND METHOD FOR MANUFACTURING A HUMIC ACID EXTRACT
PROCÉDÉ DE PRODUCTION D'UN EXTRAIT D'ACIDE HUMIQUE, AINSI QU'EXTRAIT D'ACIDE HUMIQUE

(30) Priorität: 25.11.2020 DE 102020007220
(43) Veröffentlichungstag der Anmeldung: 01.06.2022
(73) Patentinhaber: BHI Beauty & Health Investment Group Management GmbH, 85774 Unterföhring (DE)
(72) Erfinder: Asam, Erich, 83684 Tegernsee (DE); ASAM, Marcus, 85774 Unterfoehring (DE)
(74) Vertreter: KBN IP Patentanwälte Partnerschaft mbB

(56) Entgegenhaltungen:
- DE-C2- 4 203 720
- ANONYMOUS: "Huminsäuren - Wikipedia", 17 August 2018 (2018-08-17), pages 1 - 3, XP055906265, Retrieved from the Internet <URL:https://de.wikipedia.org/wiki/Huminsäuren> [retrieved on 20220329]
- ST. MARTIN C. C.G. ET AL: "Compost and compost tea: Principles and prospects as substrates and soil-borne disease management strategies in soil-less vegetable production", BIOLOGICAL AGRICULTURE AND HORTICULTURE, vol. 28, no. 1, 1 March 2012 (2012-03-01), pages 1 - 33, XP055906252, ISSN: 0144-8765, DOI: 10.1080/01448765.2012.671516
- MERCEDES DEL PILAR SALGADO MARTINEZ MARIA: "Influence of compost and humic substances on soil and fruit quality in Table Grape under intensive management in Chile", 30 December 2012 (2012-12-30), pages 1 - 138, XP055906179, Retrieved from the Internet <URL:https://bonndoc.ulb.uni-bonn.de/xmlui/bitstream/handle/20.500.11811/5112/2902.pdf?sequence=1&isAllowed=y>
- DÄNEZ F. ET AL: "Grape Marc Compost Tea Suppressiveness to Plant Pathogenic Fungi: Role of Siderophores", vol. 14, no. 1, 1 January 2006 (2006-01-01), US, pages 48 - 53, XP055906273, ISSN: 1065-657X, Retrieved from the Internet <URL:https://www.tandfonline.com/doi/pdf/10.1080/1065657X.2006.10702262?needAccess=true> DOI: 10.1080/1065657X.2006.10702262

## Beschreibung

Die Erfindung betrifft ein Verfahren zum Herstellen eines Huminsäureextraktes aus einem Traubentrester sowie einen mit diesem Verfahren hergestellten Huminsäureextrakt.

Aus der DE 42 03 720 C2 ist ein Verfahren und eine Vorrichtung zum Herstellen eines Düngemittels aus Traubentrester bekannt. Bei diesem Verfahren wird Traubentrester zunächst einer anaeroben Rottung unterzogen und anschließend mit einer scherenden und walkenden Schneckenförderung zerkleinert. Unter Zufuhr von Luft wird dieser dann aerob einer weiteren Rottung unterzogen, um anschließend durch Sieben bzw. mittels Windsichtung Kerne auszuscheiden, welche ggf. einer Ölmühle zugeführt werden. Die übrige Masse bildet einen Kompost zur Pflanzendüngung. "Influence of compost and humic substances on soil and fruit quality in Table Grape under intensive management in Chile", Doktorarbeit von Maria Mercedes del Pilar Martinez Salgado an der Rheinischen Friedrich-Wilhelms-Universität zu Bonn vorgelegt am 29.02.2012 und "Grape Marc Compost Tea Suppressiveness to Plant Pathogenic Fungi: Role of Siderophores" von F. Diänez met al., Compost Science & Utilization, 14:1, 48-53, 2006, DOI: 10.1080/1065657X.2006.10702262 offenbaren beide die Kompostierung von Traubentrester mit nachfolgender alkalischer Extraktion der Huminsäuren.

Dieses Verfahren hat sich in der Praxis gut bewährt und bildet den Ausgangspunkt der vorliegenden Erfindung.

Der Erfindung liegt die Aufgabe zugrunde, ein Verfahren zum Herstellen eines Huminsäureextraktes anzugeben, welches sich durch günstig erwerbbare Rohstoffe und einer einfachen Handhabung auszeichnet.

Diese Aufgabe wird mit dem in Anspruch 1 definierten Verfahren gelöst.

Bei dem erfindungsgemäßen Verfahren wird ein Traubentrester zunächst anaerob kompostiert. Hierzu werden Mikroorganismen herangezogen, welche keinerlei Sauerstoff benötigen. Im Folgenden wird der vorkompostierte Traubentrester zerkleinert, wobei es auf die konkrete Art der Zerkleinerung nicht ankommt. Wichtig an der Zerkleinerung ist lediglich, dass sich die wirksame Oberfläche dieses Materials entsprechend vergrößert, um einen effektiven Luft- bzw. Gasaustausch zu erzielen. Anschließend wird dieses Material unter Zufuhr von Luft und/oder Sauerstoff aerob kompostiert. Hierzu werden Sauerstoff veratmende Mikroorganismen eingesetzt. Bei dieser Kompostierung entstehen Huminstoffe, die für vielerlei Zwecke nutzbar sind. Die Huminstoffkonzentration ist dabei keine monoton steigende Funktion, sondern sie besitzt ein Maximum, da durch weitere Kompostierung Huminstoffe auch wieder abgebaut werden. Um aus diesem Kompost den Huminsäureextrakt zu gewinnen, wird dieser nun mit Wasser gemischt, so dass die im Kompost enthaltenen Huminstoffe in das Wasser abgegeben werden. Anschließend wird das Gemisch filtriert und/oder sedimentiert, um auf diese Weise eine feste Phase von einer flüssigen Phase zu trennen. Die abgetrennte flüssige Phase bildet dabei den Huminsäureextrakt. Die Durchführung dieses Verfahrens ist überraschend einfach. Es muss lediglich der optimale Zeitpunkt der Wasserzugabe halbwegs bestimmt werden, um eine günstige Huminstoffausbeute zu erzielen.

Die anaerobe Kompostierung des Traubentresters im Schritt a) erfordert die Vermehrung anaerober Mikroorganismen, die aber in Konkurrenz zu aeroben Mikroorganismen stehen. Es hat sich aber herausgestellt, dass insbesondere der anaerobe Kompostierprozess für die Bildung der Huminstoffe von erheblicher Bedeutung ist. Deshalb ist es vorteilhaft, in diesem Verfahrensschritt eine mögliche Sauerstoffzufuhr möglichst zu unterbinden. Es ist zwar grundsätzlich denkbar, diesen Verfahrensschritt in einer Schutzgasatmosphäre durchzuführen, jedoch ist es wesentlich einfacher und insbesondere kostengünstiger, den Traubentrester in diesem Verfahrensschritt zu verdichten. Diese Verdichtung hat eine erhebliche Reduktion der wirksamen Oberfläche zur Folge, was den Gasaustausch erheblich reduziert. Anaerobe Mikroorganismen werden in ihrer Tätigkeit von dieser Verdichtung nicht beeinflusst. Für den Verfahrensschritt a) hat sich eine Prozessdauer zwischen 5 und 8 Monaten bewährt. Bei zu kurzer Prozessdauer verringert sich der Anteil an Huminstoffen im Extrakt erheblich. Eine zu lange Prozessdauer bringt dagegen bezüglich des Huminstoffgehalts keinen nennenswerten Vorteil mehr, behindert aber den aeroben Kompostiervorgang gemäß Verfahrensschritt c). Es hat sich herausgestellt, dass eine Verfahrensdauer des Verfahrensschrittes a) zwischen 6 und 7 Monaten optimal ist.

Die Zerkleinerung gemäß dem Verfahrensschritt b) erfolgt vorteilhafterweise mittels Förderschnecken bzw. Klumpenbrechern. Dabei ist es wichtig, die sehr dichte Masse aufzubrechen, um einen ausreichenden Sauerstoffaustausch für den Verfahrensschritt c) zu gewährleisten. Nachdem die gesamte Masse aber klebrig und zäh ist, stehen nur wenige sinnvoll anwendbare Zerkleinerungsverfahren zur Verfügung.

Um einen ausreichenden Sauerstoffaustausch sicherzustellen, ist es günstig, wenn der Verfahrensschritt c) in mindestens einer Gitterbox erfolgt. Aufgrund der klebrigen Konsistenz der zu verarbeitenden Masse sind Vollwände zum Lagern derselben nicht erforderlich. Bei einer Gitterbox besteht mindestens eine Wand wenigstens teilweise aus einem Gitter, wodurch ein optimaler Luftaustausch gewährleistet ist.

Für den Verfahrensschritt c) hat sich eine Prozesszeit zwischen 6 und 8 Wochen bewährt. In dieser Zeit haben die an der Oberfläche der einzelnen Klumpen sitzenden Mikroorganismen die Masse ausreichend zersetzt. Im Inneren eines Klumpens können diese Mikroorganismen aber mangels Sauerstoffzufuhr nicht kompostieren, so dass eine Verlängerung dieser Prozesszeit keinen positiven Effekt mehr hat. Vorzugsweise liegt die Prozesszeit im Bereich von 7 Wochen.

Die Beendigung des Verfahrensschrittes c) sollte nicht ausschließlich von der Prozessdauer bestimmt sein. Es ist wesentlich sinnvoller, die Temperatur des zwischenbearbeiteten Traubentresters zu prüfen. Nachdem der aerobe Kompostierprozess exotherm ist, gibt die Temperatur ein gutes Maß für die Tätigkeit der aeroben Mikroorganismen. Sobald die gemessene Temperatur merklich abfällt, kann man davon ausgehen, dass der aerobe Kompostierprozess ineffizient wird und der Verfahrensschritt c) beendet werden sollte.

Ein wesentliches Problem dieses Verfahrens besteht darin, dass das anaerob kompostierte Material nicht fein genug aufgebrochen werden kann, um das Material effizient aerob durchzukompostieren. Deshalb ist es vorteilhaft, die Verfahrensschritte b) und c) mehrfach hintereinander auszuführen. Bei jedem aeroben Kompostierprozess gemäß Verfahrensschritt c) verringert sich die Klebrigkeit der Masse, so dass diese anschließend besser zerkleinert werden kann. Durch die iterative Ausführung der Verfahrensschritte b) und c) ergibt sich daher eine effiziente Durchkompostierung des gesamten Materials durch aerobe Mikroorganismen.

Insbesondere mit fortschreitender Prozessführung ist es möglich und sinnvoll, nach dem Verfahrensschritt b) oder c) zusätzlich einen weiteren Verfahrensschritt b1) einzufügen, bei dem das Material gemahlen wird. Auf diese Weise ergibt sich eine besonders große Oberfläche, die einen optimalen Luftaustausch für die aeroben Mikroorganismen bietet.

Für den Mahlvorgang b1) ist es zweckmäßig, diesen bei jedem Wiederholungsschritt feiner auszuführen. Dies bedeutet nicht notwendigerweise, dass der Verfahrensschritt b1) bei jedem Wiederholungsschritt ausgeführt wird, sondern lediglich, dass wenn er ausgeführt wird, dieser feiner als bei der letzten Ausführung ausgeführt wird.

Um Grobteile auszusortieren, ist es vorteilhaft, wenn nach dem Verfahrensschritt c) oder b1) das Material einer Siebung unterworfen wird.

Bei der Extraktion der Huminstoffe im Verfahrensschritt d) ist es vorteilhaft, wenn das Trester-Wasser-Gemisch gerührt wird. Durch den Rührvorgang wird eine Homogenisierung der Huminstoffe im Wasser erzeugt. Dadurch ergibt sich stets ein großer Konzentrationsgradient der Huminstoffkonzentration zwischen dem verbleibenden Feststoff und der flüssigen Phase, was zu einer hohen Extraktionsrate führt.

Es hat sich herausgestellt, dass nach der Extraktion der Huminstoffe und dem Abtrennen der flüssigen Phase vom Feststoff immer noch chemische Reaktionen ablaufen, die den Huminstoffgehalt des Extrakts positiv beeinflussen. Diese Reaktionen laufen erstaunlicherweise schneller ab, wenn der Extrakt unbewegt ist. Aus diesem Grund ist es vorteilhaft, nach dem Abtrennen der flüssigen Phase im Verfahrensschritt e) den Huminsäureextrakt einem Reifeprozess zu unterwerfen. Dies geschieht durch Lagerung für mindestens 6 Monate, vorzugsweise mindestens 10 Monate in einem Tank ohne jegliche Flüssigkeitsbewegung.

Der auf diese Weise gewonnene Huminsäureextrakt hat überraschend vorteilhafte Eigenschaften, die ihn als Nahrungsergänzungsmittel bzw. als Futtermittelzusatz auszeichnen. Insbesondere hat sich herausgestellt, dass die Methangasproduktion im Darm von Wirbeltieren, insbesondere von Pflanzenfressern, sehr stark reduziert wird, was sich sehr positiv auf die Tiergesundheit und das Tierwohl auswirkt. Zusätzlich leistet dies einen Beitrag zur Reduktion von Treibhausgasen in der Tierzucht.

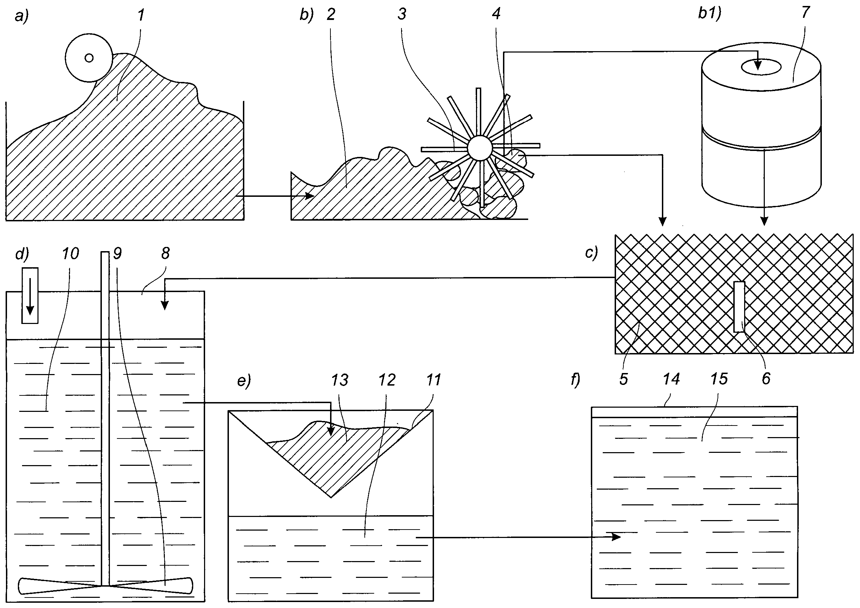

Der Erfindungsgegenstand wird beispielhaft anhand der Zeichnung erläutert, ohne den Schutzbereich zu beschränken.

Die einzige Figur zeigt eine schematische Prinzipdarstellung des erfindungsgemäßen Verfahrens. Ein Traubentrester 1, also der Pressrückstand von Weintrauben, wird im Verfahrensschritt a) zunächst verdichtet und anschließend über eine Zeitdauer zwischen 6 und 7 Monaten anaerob kompostiert. Durch die Verdichtung wird erreicht, dass Luft bzw. Sauerstoff - bedingt durch die verringerte Oberfläche des Traubentresters 1 - ausgeschlossen wird und sich damit anaerobe Mikroorganismen besser vermehren können.

Anschließend wird der vorkompostierte Traubentrester 2 im Verfahrensschritt b) mittels eines Klumpenbrechers 3 aufgebrochen, so dass dieser in mehr oder weniger große Bruchstücke 4 zerfällt. Es ist dabei relativ schwierig, den vorkompostierten Traubentrester 2 zu zerkleinern, da er durch seinen hohen Zucker- und Feuchtigkeitsgehalt sehr klebrig ist.

In einem weiteren Verfahrensschritt c) werden die Bruchstücke 4 des vorkompostierten Traubentresters 2 in eine Gitterbox 5 gefüllt, so dass ein reger Luftaustausch besteht. Nun beginnen aerobe Mikroorganismen mit einer zweiten, aeroben Kompostierung. Um zuverlässig zu erkennen, wann die aerobe Kompostierung zurückgeht, ist in der Gitterbox 5 ein Temperaturfühler 6 vorgesehen. Da die Kompostierung exotherm ist, erhöht sich die Temperatur während des Kompostiervorgangs, so dass ein Messsignal des Temperaturfühlers 6 ein zuverlässiger Indikator dafür ist, wie stark der Kompostiervorgang am Laufen ist.

Durch den aeroben Kompostiervorgang c) reduziert sich sowohl der Zuckerals auch der Feuchtigkeitsgehalt der Masse und kann nun einfacher bearbeitet werden. Eine weitere Bearbeitung ist deswegen erforderlich, weil die relativ großen Bruchstücke 4 keinen Gasaustausch in deren Zentrum erlauben. Deshalb wird die gesamte Masse erneut dem Klumpenbrecher 3 zugeführt und die Verfahrensschritte b) und c) mehrfach wiederholt. Dadurch verringert sich die Größe der Bruchstücke 4 weiter, so dass sich neue Oberflächen ergeben, an denen aerobe Kompostierung im Verfahrensschritt c) ermöglicht wird.

Ist die Masse durch diese zyklisch wiederholten Prozessschritte b) und c) hinreichend trocken, so wird zwischen dem Verfahrensschritt b) und c) als weiterer Verfahrensschritt b1) ein Mahlvorgang in einer Mühle 7 eingefügt, durch den die Teilchengröße noch einmal erheblich reduziert wird. Damit werden die Verfahrensschritte b), b1) und c) hintereinander zyklisch durchlaufen, wobei die im Mahlvorgang b1) erzielte Korngröße in jedem Zyklus feiner wird.

Ist das Material ausreichend durchkompostiert, so wird es ggf. ein letztes Mal in der Mühle 7 im Prozessschritt b1) gemahlen und anschließend unter Zugabe von Wasser in einen Behälter 8 gefüllt. Dieser Behälter 8 ist mit einem Rührwerk 9 versehen, der das Flüssigkeits-/Feststoffgemisch 10 ständig umwälzt. In diesem Behälter 8 wird in einem Verfahrensschritt d) erreicht, dass Huminstoffe aus dem Feststoff in die flüssige Phase 12 abgegeben werden.

Anschließend wird das Flüssigkeits-/Feststoffgemisch 10 im Verfahrensschritt e) mittels eines Filters 11 filtriert und dabei eine flüssige Phase 12 von einem Feststoff 13 getrennt.

Anschließend wird die flüssige Phase 12 einem Tank 14 zugeführt, in dem diese für mindestens 6 Monate reift und dabei den gewünschten Huminsäureextrakt 15 bildet.

Der auf diese Weise hergestellte Huminsäureextrakt 15 wurde labortechnisch untersucht und dabei nachgewiesen, dass auf standardisierten Nährmedien E. coli Bakterien eine signifikant höhere Vermehrungsrate aufweisen. Dies hat einen positiven Effekt auf eine Darmschleimhaut, wodurch die Nährstoffaufnahme erleichtert wird. Außerdem enthält dieser Huminsäureextrakt 15 Laktobazillen, die ebenfalls eine positive Auswirkung auf die Darmschleimhaut besitzen.

### Bezugszeichenliste

- 1: Traubentrester
- 2: vorkompostierter Traubentrester
- 3: Klumpenbrecher
- 4: Bruchstück
- 5: Gitterbox
- 6: Temperaturfühler
- 7: Mühle
- 8: Behälter
- 9: Rührwerk
- 10: Flüssigkeits-/Feststoffgemisch
- 11: Filter
- 12: flüssige Phase
- 13: Feststoff
- 14: Tank
- 15: Huminsäureextrakt

## Patentansprüche

1. Verfahren zum Herstellen eines Huminsäureextraktes (15), bei dem
a) Traubentrester (1) anaerob kompostiert,
b) anschließend zerkleinert und
c) dann aerob unter Zufuhr von Luft und/oder Sauerstoff kompostiert wird,
**dadurch gekennzeichnet, dass**
d) dieser mit Wasser gemischt wird, um darin enthaltene Huminstoffe in das Wasser abzugeben und
e) anschließend das Gemisch filtriert und/oder sedimentiert wird, wobei eine abgetrennte flüssige Phase (12) den Huminsäureextrakt (15) bildet.

2. Verfahren nach Anspruch 1, bei dem der Traubentrester (1) im Schritt a) verdichtet wird, um eine unerwünschte Sauerstoffzufuhr möglichst zu unterbinden.

3. Verfahren nach Anspruch 1 oder 2, **dadurch gekennzeichnet, dass** der Schritt a) zwischen 5 und 8 Monate, vorzugsweise zwischen 6 und 7 Monate dauert.

4. Verfahren nach mindestens einem der Ansprüche 1 bis 3, **dadurch gekennzeichnet, dass** der Verfahrensschritt b) mittels Förderschnecken und/oder Klumpenbrechern (3) erfolgt.

5. Verfahren nach mindestens einem der Ansprüche 1 bis 4, **dadurch gekennzeichnet, dass** der Schritt c) zwecks Erhöhung der Gaszufuhr in mindestens einer Gitterbox (5) erfolgt.

6. Verfahren nach mindestens einem der Ansprüche 1 bis 5, **dadurch gekennzeichnet, dass** der Verfahrensschritt c) zwischen 6 und 8 Wochen, vorzugsweise um 7 Wochen dauert.

7. Verfahren nach mindestens einem der Ansprüche 1 bis 6, **dadurch gekennzeichnet, dass** eine Beendigung des Verfahrensschrittes c) von einer gemessenen Temperatur des zwischenbearbeiteten Traubentresters (1) abhängt.

8. Verfahren nach mindestens einem der Ansprüche 1 bis 7, **dadurch gekennzeichnet, dass** die Verfahrensschritte b) und c) mehrfach ausgeführt werden.

9. Verfahren nach mindestens einem der Ansprüche 1 bis 8, bei dem nach dem Verfahrensschritt b) oder c) zusätzlich b1) das Material gemahlen wird.

10. Verfahren nach Anspruch 9, **dadurch gekennzeichnet, dass** der Mahlvorgang b1) bei jedem Wiederholungsschritt feiner ausgeführt wird.

11. Verfahren nach mindestens einem der Ansprüche 1 bis 10, **dadurch gekennzeichnet, dass** nach dem Verfahrensschritt c) oder b1) das Material einer Siebung unterworfen wird.

12. Verfahren nach mindestens einem der Ansprüche 1 bis 11, **dadurch gekennzeichnet,** das im Verfahrensschritt d) das Trester-Wasser-Gemisch gerührt wird.

13. Verfahren nach mindestens einem der Ansprüche 1 bis 12, **dadurch gekennzeichnet, dass** nach dem Verfahrensschritt e) der gewonnene Huminsäureextrakt (15) einem Reifeprozess f) unterworfen wird, indem er in mindestens einem Tank für mindestens 6 Monate, vorzugsweise mindestens 10 Monate gelagert wird.

14. Huminsäureextrakt, **dadurch gekennzeichnet, dass** er nach einem Verfahren gemäß mindestens einem der Ansprüche 1 bis 13 hergestellt ist.

## Claims

1. Method for the production of a humic acid extract (15), in which
a) grape pomace (1) is anaerobically composted,
b) then comminuted and
c) then aerobically composted with the addition of air and/or oxygen,
**characterized in that**
d) it is mixed with water in order to release the humic substances contained therein into the water and
e) the mixture is then filtered and/or sedimented, whereby a separated liquid phase (12) constitutes the humic acid extract (15).

2. Method according to claim 1, wherein the grape pomace (1) is compacted in step a) in order to prevent unwanted oxygen supply as far as possible.

3. Method according to claim 1 or 2, **characterized in that** step a) lasts between 5 and 8 months, preferably between 6 and 7 months.

4. Method according to at least one of claims 1 to 3, **characterized in that** process step b) is carried out by means of conveying screws and/or lump breakers (3).

5. Method according to at least one of claims 1 to 4, **characterized in that** step c) is carried out in at least one grid box (5) in order to increase the gas supply.

6. Method according to at least one of claims 1 to 5, **characterized in that** process step c) lasts between 6 and 8 weeks, preferably around 7 weeks.

7. Method according to at least one of claims 1 to 6, **characterized in that** completion of process step c) depends on a measured temperature of the processed grape marc (1).

8. Method according to at least one of claims 1 to 7, **characterized in that** process steps b) and c) are carried out several times.

9. Method according to at least one of claims 1 to 8, in which, after the step b) or c) or the process, the material is additionally ground in step b1).

10. Method according to claim 9, **characterized in that** the grinding process b1) is carried out more finely at each repetition step.

11. Method according to at least one of claims 1 to 10, **characterized in that**, after process step c) or b1), the material is subjected to screening.

12. Method according to at least one of claims 1 to 11, **characterized in that**, in process step d), the pomace-water mixture is stirred.

13. Method according to at least one of claims 1 to 12, **characterized in that** after process step e), the humic acid extract (15) obtained is subjected to a maturation process f) by being supported in at least one tank for at least 6 months, preferably at least 10 months.

14. Humic acid extract, **characterized in that** it is produced according to a method according to at least one of claims 1 to 13.

## Revendications

1. Procédé de préparation d'un extrait d'acide humique (15), dans lequel
a) du marc de raisin (1) est composté de manière anaérobie,
b) puis broyé et
c) ensuite composté de manière aérobie avec amener d'air et/ou d'oxygène
**caractérisé en ce que**
d) il est mélangé à de l'eau afin de libérer dans l'eau les substances humiques qu'il contient et
e) le mélange est ensuite filtré et/ou sédimenté, une phase liquide séparée (12) formant l'extrait d'acide humique (15).

2. Procédé selon la revendication 1, dans lequel le marc de raisin (1) est compacté à l'étape a) afin d'empêcher autant que possible un apport indésirable d'oxygène.

3. Procédé selon la revendication 1 ou 2, **caractérisé en ce que** l'étape a) dure entre 5 et 8 mois, de préférence entre 6 et 7 mois.

4. Procédé selon au moins l'une des revendications 1 à 3, **caractérisé en ce que** l'étape b) est réalisée à l'aide de vis sans fin et/ou de broyeurs d'agglomérats (3).

5. Procédé selon au moins l'une des revendications 1 à 4, **caractérisé en ce que** l'étape c) est réalisée dans au moins une caisse grillagée (5) afin d'augmenter l'apport de gaz.

6. Procédé selon au moins l'une des revendications 1 à 5, **caractérisé en ce que** l'étape c) dure entre 6 et 8 semaines, de préférence environ 7 semaines.

7. Procédé selon au moins l'une des revendications 1 à 6, **caractérisé en ce que** la fin de l'étape c) dépend d'une température mesurée de la bagasse de raisin (1) traitée.

8. Procédé selon au moins l'une des revendications 1 à 7, **caractérisé en ce que** les étapes b) et c) sont exécutées plusieurs fois.

9. Procédé selon au moins l'une des revendications 1 à 8, dans lequel, après l'étape b) ou c), on effectue en outre l'étape b1) consistant à broyer le matériau.

10. Procédé selon la revendication 9, **caractérisé en ce que** le processus de broyage b1) est effectué de manière plus fine à chaque étape répétitive.

11. Procédé selon au moins l'une des revendications 1 à 10, **caractérisé en ce que,** après l'étape c) ou b1), le matériau est soumis à un tamisage.

12. Procédé selon au moins l'une des revendications 1 à 11, **caractérisé en ce que,** dans l'étape d), le mélange marc-eau est agité.

13. Procédé selon au moins l'une des revendications 1 à 12, **caractérisé en ce que,** après l'étape e) du procédé, l'extrait d'acide humique obtenu (15) est soumis à un processus de maturation f) en étant stocké dans au moins un réservoir pendant au moins 6 mois, de préférence au moins 10 mois.

14. Extrait d'acide humique, **caractérisé en ce qu'il** est préparé selon un procédé conforme à au moins l'une des revendications 1 à 13.
